(19) Europäisches Patentamt / European Patent Office / Office européen des brevets

(11) **EP 4 391 353 A1**

(12) **EUROPEAN PATENT APPLICATION**
published in accordance with Art. 153(4) EPC

(43) Date of publication:
**26.06.2024 Bulletin 2024/26**

(21) Application number: **22864721.0**

(22) Date of filing: **02.09.2022**

(51) International Patent Classification (IPC):
*H02P 9/04* (2006.01)    *H02J 3/32* (2006.01)
*H02J 3/38* (2006.01)    *H02J 7/00* (2006.01)
*H02J 7/02* (2016.01)    *H02J 7/34* (2006.01)
*H02J 15/00* (2006.01)    *H02P 103/20* (2016.01)

(52) Cooperative Patent Classification (CPC):
**H02J 3/32; H02J 3/38; H02J 7/00; H02J 7/02;
H02J 7/34; H02J 15/00; H02P 9/04;** Y02E 60/10

(86) International application number:
**PCT/JP2022/033083**

(87) International publication number:
**WO 2023/033139 (09.03.2023 Gazette 2023/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **03.09.2021   JP 2021143659
05.07.2022   JP 2022108542**

(71) Applicant: **Haya Co., Ltd.
Hofu-shi, Yamaguchi 747-0024 (JP)**

(72) Inventor: **HAYASHI, Nobuo
Hofu-shi, Yamaguchi 747-0024 (JP)**

(74) Representative: **Dolleymores
9 Rickmansworth Road
Watford, Hertfordshire WD18 0JU (GB)**

(54) **ELECTRICITY STORAGE AND DISCHARGE SYSTEM**

(57)    To provide a power storage and discharge system capable of efficiently supplying appropriate auxiliary power at low cost as needed according to changes in power transmission demand as a whole power system even if power generation failure occurs at one power receiving point.

A power storage and discharge system includes one or more power receiving points of an AC source supplied from a predetermined power system, and an AC-DC converter 2 for converting the AC source supplied from the predetermined power system into a DC source. Any of two or more equally dividable storage battery groups 6A and 6B is charged based on the DC source converted by the AC-DC converter 2. AC power is discharged or generated due to discharging by a discharge resource using the charged DC source. The power receiving points of the AC source include one or more power receiving points, disposed from an upper side toward a lower side with respect to the predetermined power system, other than a point where the power discharged or generated due to discharging by the discharge resource is interconnected to the power system.

FIG.1

## Description

[Technical Field]

The present invention relates to a power storage and discharge system using a power transmission network.

[Background]

Japan is developing power generation using natural energy such as solar power generation, wind power generation, wave power generation, and hydraulic power generation in response to a $CO_2$ emission reduction policy, but power supply still depends on thermal power generation and nuclear power generation.

Here, when focusing on structural types of the hydraulic power generation, there are three modes including a "conduit type power plant", a "dam type power plant", and a "dam-conduit type power plant", and operational types of the hydraulic power generation include a "flow-in type power plant", a "regulating reservoir type power plant", a "reservoir type power plant", and a "pumped-storage type power plant". Among these, the "pumped-storage type power plant" plays an important role as a power generation system to be adapted to daily power demand.

Specifically, it is a well-known fact that the power demand greatly varies depending on the time of day. Considering a power situation in summer, a power load is heavy during the hours when cooling equipment is running at full capacity.

Therefore, attention has been paid to a pumped-storage type power generation in which reservoirs are provided above and below a power plant, water in the lower reservoir is pumped up to the upper reservoir by using surplus power at light load time such as nighttime, and the pumped water in the upper reservoir is discharged to the lower reservoir to generate power when power consumption is at peak such as in the daytime (see Patent Literatures 1 and 2).

On the other hand, Non-Patent Literature 1 below discloses a concern about potential and cost of the pumped-storage power generation as a storage battery system in Japan. The following Non-Patent Literatures 2 to 5 show technical backgrounds of the present invention, and the descriptions thereof are omitted.

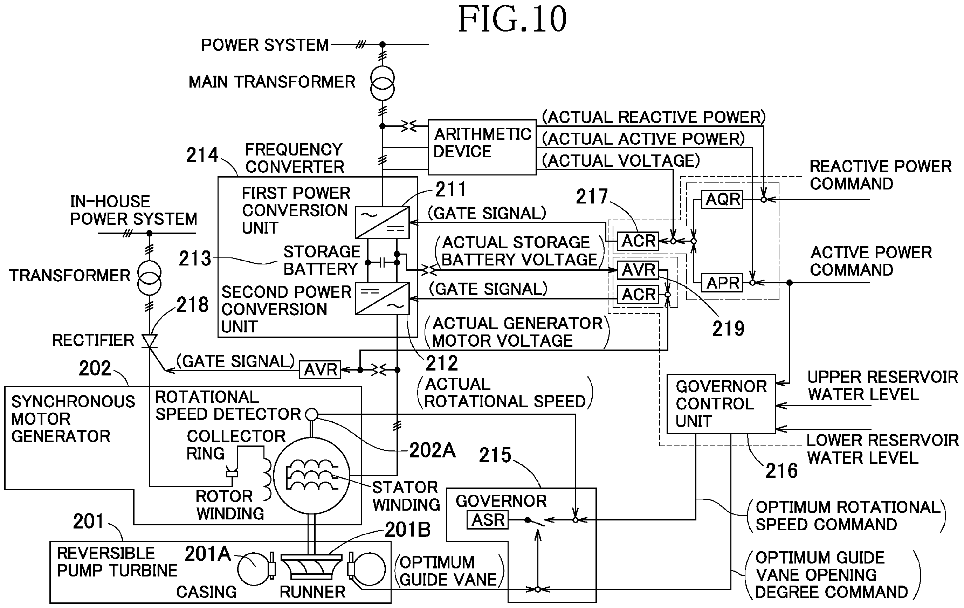

Fig. 10 is a circuit block diagram illustrating a configuration of a conventional pumped-storage power generation system.

This example includes a reversible pump turbine 201; a synchronous motor generator 202 directly connected to a runner shaft of the reversible pump turbine 201; a frequency converter 214 including a first power conversion unit 211 and a second power conversion unit 212 capable of reversible conversion from alternating current (AC) power to direct current (DC) power and from the DC power to the AC power and a storage battery 213 disposed between the first power conversion unit 211 connected to a power system and the second power conversion unit 212 connected to the synchronous motor generator 202; a governor 215 that adjusts an opening degree of guide vanes of the reversible pump turbine 201; and a control device 216 that controls the first power conversion unit 211, the second power conversion unit 212, and the governor 215. The control device 216 includes a first frequency converter control unit 217 that controls the first power conversion unit 211 in accordance with a reactive power command and an active power command from the outside.

The frequency converter 214 receives an AC voltage generated by the synchronous motor generator 202 during power generation operation, and converts the AC voltage to equalize a frequency of the AC voltage with a frequency of the power system.

In addition, the frequency converter 214 receives power supply from the power system during pumping operation, and generates driving power for operating the synchronous motor generator 2 as a motor. The frequency converter 214 includes the first power conversion unit 211 disposed on a main transformer side, the second power conversion unit 212 disposed on a synchronous motor generator 202 side, and the storage battery 213 disposed between the first power conversion unit 211 and the second power conversion unit 212. The second power conversion unit 212 is connected to a stator winding of the synchronous motor generator 202.

A rotor of the synchronous motor generator 202 is directly connected to the runner shaft of the reversible pump turbine 201, and during the power generation operation, the reversible pump turbine 201 is rotated by hydraulic power, which rotates the rotor to generate power. During the pumping operation, the synchronous motor generator 202 is applied with driving power from the frequency converter 214 to operate as a motor so as to rotate the reversible pump turbine 201 to pump up water. The synchronous motor generator 202 includes a rotational speed detector 202A that detects rotational speed of the rotor.

A direct current supplied to a rotor winding of the synchronous motor generator 202 is generated by a rectifier 218 that rectifies AC power supplied from an in-house power system. The rectifier 218 is connected to an automatic voltage regulator (AVR) 219 that is a rectifier control unit that generates a gate signal as a control signal for the rectifier 218.

The reversible pump turbine 201 includes a casing 201A, a runner 201B, and guide vanes disposed between the casing 201A and the runner 201B. The casing 201A is connected to the upper reservoir, and water flows to a runner 201B side via the guide vanes during the power generation operation.

Water flows in a reverse direction during the pumping operation. When the opening degree of the guide vanes is changed, an amount of water that flows from the casing 201A to the runner 201B side or in the reverse direction changes accordingly. That is, by adjusting the opening degree of the guide vanes, an amount of power generation can be adjusted during the power generation operation, and an amount of pumping can be adjusted during the pumping operation.

However, during the pumping operation, the guide vanes are adjusted to have an optimum opening degree corresponding to an operation state of the synchronous motor generator 202 in order to minimize a loss.

The control device 216 is a device that controls the frequency converter 214 and the governor 215, and generates a gate signal for controlling the first power conversion unit 211 and the second power conversion unit 212 in the frequency converter 214 and a command signal (an optimum rotational speed command and an optimum guide vane opening degree command) for the governor 215 based on a reactive power command, an active power command, and various information such as an upper reservoir water level, or a lower reservoir water level input from the outside.

[Citation List]

[Patent Literature]

Patent Literature 1: Japanese Unexamined Patent Application Publication No. 2015-012636
Patent Literature 2: Japanese Unexamined Patent Application Publication No. 2017-163745
Patent Literature 3: Japanese Unexamined Patent Application Publication No. 2015-19538

[Non-Patent Literature]

Non-Patent Literature 1: Proposal Papers for Innovation Policy Making Based on Technology and Economic/Social Quantitative Scenarios for Realizing Law Carbon Society, Potential and Cost of Pumped-storage Power Generation as Storage Battery System in Japan, published by Japan Science and Technology Agency, Strategy Center for Low Carbon Society in January, 2019
Non-Patent Literature 2: Electric Double-layer Capacitor and Storage System, third edition, written by Michio Okamura, published by The Nikkan Kogyo Shimbun, Ltd. on Sep. 30, 2005
Non-Patent Literature 3: Large Scale Power Storage Battery, first edition, edited by Electrochemical Energy Conference, published by The Nikkan Kogyo Shimbun, Ltd. on Mar. 28, 2011
Non-Patent Literature 4: d-book Pumped-Storage Power Plant, written by Miyuki Chiba, published by Denkishoin, Ltd. on Dec. 20, 2000
Non-Patent Literature 5: d-book Operation and Test of Transformer, written by Shouzou Hagino, published by Denkishoin, Ltd. on Dec. 12, 2000

[Summary of the Invention]

[Technical Problem]

A pumped-storage power generation apparatus configured as described above has been active as a system for supplementing electric power for about 80 years in Japan.

In the pumped-storage power generation apparatus, generated power is used to pump up water, and falling energy of the pumped-up water is converted into power to flexibly supplement all electric power.

Further, as for an area of a facility as the pumped-storage power generation apparatus, technical and structural problems have been pointed out such as that the upper and lower reservoirs are each required to have a size corresponding to a square with a side of 100 m, and a fall between the upper and lower reservoirs is required to be 200 m or more to minimize cost regardless of an amount of stored water.

Further, the pumped-storage power generation system requires an environment in which a water source can be constantly secured, and cannot generate power after all the water supplied from the water source is discharged, and thus can function only as an auxiliary power generation facility.

Meanwhile, a power generation system disclosed in Patent Literature 3 is characterized by a configuration in which a plurality of storage batteries are disposed only for one power receiving point of a power system. However, it has been pointed out that there is a problem that when some sort of power generation failure occurs in the power generation system itself, the power generation system cannot function until the failure is recovered.

[Advantageous Effects of Invention]

The present invention has been made to solve the above problems, and an object of the present invention is to provide a power storage and discharge system that can efficiently supply appropriate auxiliary power at low cost as needed according to changes in power transmission demand as a whole power system even if power generation failure occurs at one power receiving point. This is realized by disposing one or more power receiving points of an AC source supplied from a predetermined power system; charging storage batteries connected in series or parallel with a DC source converted from the AC source supplied from the predetermined power system by alternately switching charging and discharging; discharging AC power or generating the AC power due to discharging by a discharge resource using the charged DC source; and interconnecting the discharged or generated AC power to the predetermined power system.

[Solution to Problem]

A power storage and discharge system according to the present invention includes one or more power receiving points of an AC source supplied from a predetermined power system, a plurality of storage battery groups that are charged with a DC source converted from the AC source, a discharge resource that discharges power, or generates power due to discharging by using the DC source charged in any of the plurality of storage battery groups, and an interconnection means that interconnects AC power discharged or generated due to discharging by the discharge resource to the predetermined power system. The one or more power receiving points of the AC source include one or more power receiving points, disposed from an upper side toward a lower side with respect to the predetermined power system, other than a point where the power discharged or generated by the discharge resource is interconnected to the power system.

[Brief Description of Drawings]

The drawings illustrate specific embodiments of the present invention, including optional and preferred embodiments, as well as essential features of the invention.

Fig. 1 is a block diagram illustrating a basic configuration of a power storage and discharge system.
Fig. 2 is a block diagram illustrating a basic configuration of the power storage and discharge system according to a present embodiment.
Fig. 3 is a block diagram illustrating an example of a circuit configuration of the power storage and discharge system according to the embodiment.
Fig. 4 is a circuit block diagram illustrating a configuration of a major part of the power storage and discharge system shown in Fig. 3.
Fig. 5 is a block diagram illustrating an example of a circuit configuration of the power storage and discharge system according to the present embodiment.
Fig. 6 is a block diagram illustrating an example of a monitor circuit for detecting a remaining amount of a storage battery shown in Fig. 3.
Fig. 7 is a flowchart illustrating a discharge control method of the power storage and discharge system.
Fig. 8 is a flowchart illustrating a discharge control method of the power storage and discharge system.
Fig. 9 is a table illustrating states of switches controlled by a charging controller shown in Fig. 4.
Fig. 10 is a circuit block diagram illustrating a configuration of a conventional pumped-storage power generation system.

[Description of Embodiment]

<First Embodiment>

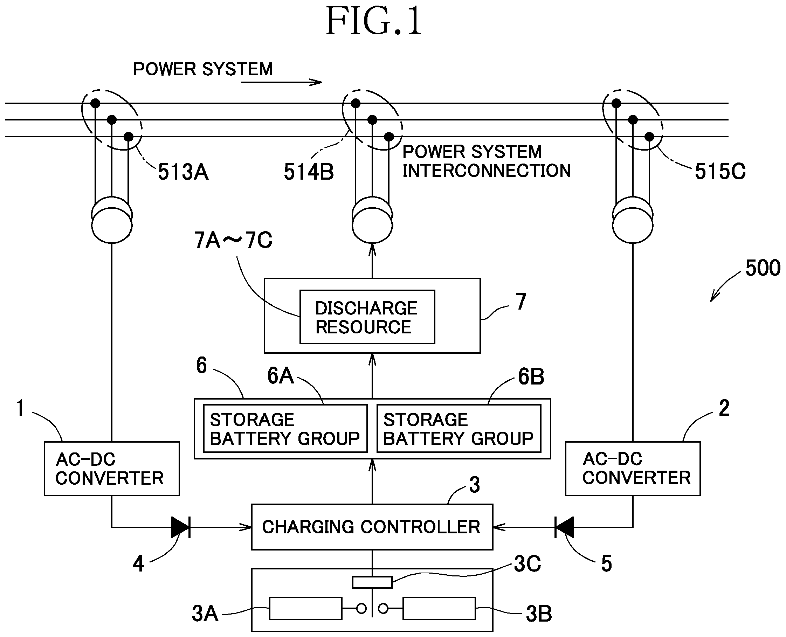

Fig. 1 is a block diagram illustrating a basic configuration of a power storage and discharge system according to the present embodiment. In this example, a power system capable of receiving and transmitting three-phase AC power will be described. The present embodiment is referred to as the power storage and discharge system. In this specification, a component referred to as a storage battery is a general term for examples of storage batteries functioning as a DC source, including a capacitor system such as a supercapacitor or a lithium-ion capacitor and a secondary battery such as a lithium-ion battery (including a NAS battery or the like). In the present embodiment, a case where the present invention is applied to a pumped-storage power generation system will be described, but the present invention can be applied between any power transmission systems without being limited by geographical factors such as mountains and cities.

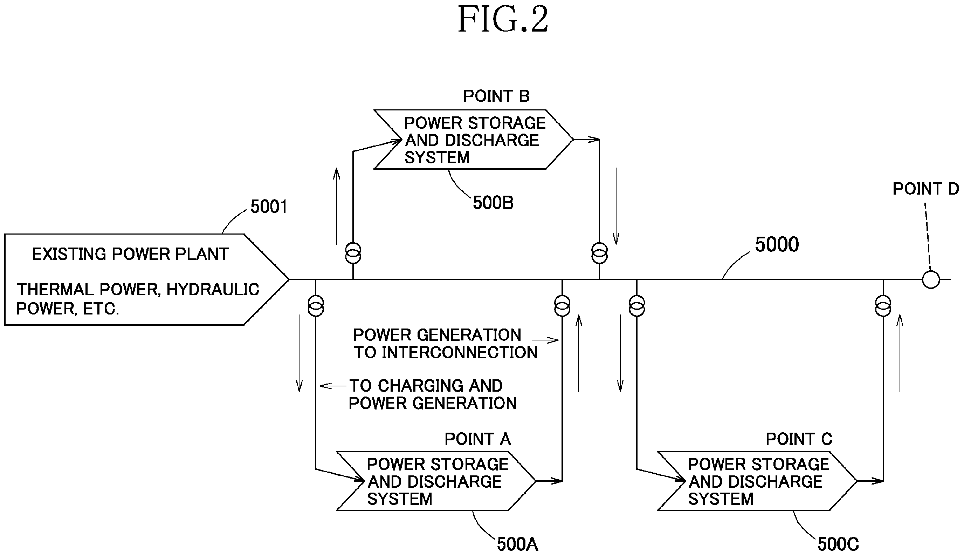

Hereinafter, a single configuration of a power storage and discharge system 500 will be described as shown in Fig. 2, but the present invention is characterized by a configuration in which a plurality of power storage and discharge systems 500 are disposed to a predetermined power system.

In the power storage and discharge system 500 shown in Fig. 1, 513A, 514B, and 515C indicate power supply from a power system and power system interconnection. A power receiving point 513A is disposed before a power system interconnection point 514B in a power transmission direction, and is supplied with power before the interconnection point (interconnection point 514B). A power receiving point 515C is disposed after the power system interconnection point 514B, and is supplied with power after the interconnection point (interconnection point 514B).

In the present embodiment, positions of the power receiving points that receive power from the power system are determined, and, as shown in Fig. 1, the positions are set with reference to the interconnection point, that is, one before the power system interconnection point 514B in the power transmission direction and the power receiving point 515C after the power system interconnection point 514B.

This anterior-posterior positions can be changed. That is, one or more power receiving points may be provided after the power receiving point, or only before or after the power receiving point. If all the power is received from the discharge resource 7A before the interconnection point, power loss may occur, and if this affects a frequency of the power system or the like, the power receiving points need to be provided before and after the interconnection point, or only after the interconnection point. A circuit configuration after receiving the power is not changed. Since Fig. 1 shows the power receiving points before and after the interconnection point, the following description will be made based on Fig. 1.

In the present embodiment, it is preferable that two or more transformers receive power, and the transformers (two or more transformers) be operated in parallel. During parallel operation of two or more transformers of the same rating, when a load is greatly reduced, it is advantageous to operate only one transformer. In order to find a demarcation point, losses (Pl, Pl') in a case of operating two transformers and in a case of operating one transformer are calculated respectively as follows, where an iron loss of one transformer is Pi and a copper loss of one transformer is Pc:

Loss in the case of two transformers:

$$Pl = 2Pi + 2Pc\alpha2$$

Loss in the case of one transformer:

$$Pl' = Pi + Pc(2\alpha)2$$

However, during the parallel operation of the two transformers, if (load capacity shared by one of the transformers)/(rated capacity of one of the transformers) = α is set, and a range of α in which operation with one transformer results in less loss is obtained, a following relational expression is satisfied:

$$Pl > Pl' \rightarrow \alpha < (Pi1/2/(2Pc)1/2)$$

Assume that Pi1/2/(2Pc)1/2 is β.

When α is less than β, it is advantageous to operate only one transformer. Here, a ratio of the copper loss to the iron loss is referred to as a loss ratio (k = Pc/Pi). The loss ratio k is approximately 4 to 6 in a case of a wound iron core, and approximately 3 to 4 in a case of a laminated iron core, and thus, for example, when k = 4, α is 35.3%.

That is, when the load capacity is less than 35.3% of a rated load (total of the rated capacities of the two transformers), it is advantageous to operate only one transformer.

However, even if the load capacity does not become less than 35.3%, only one transformer need to be operated when it is advantageous to reduce a power amount supplied to a charging controller 3.

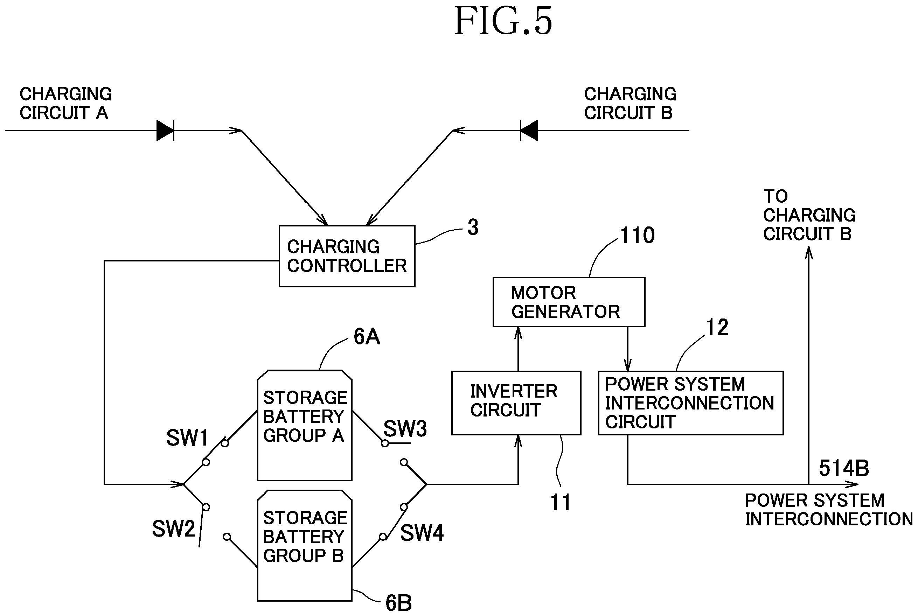

When the power is charged to storage battery groups (a storage battery group 6A and a storage battery group 6B), a remaining amount monitor 21A (21B) monitors individual storage batteries as shown in Fig. 5. The reason to reduce the power supplied to the charging controller 3 is that it is preferable to change charging power to extend a service life of each of the storage batteries such that when a terminal voltage of the storage battery is low (when a charged amount is small), the storage battery is charged with a large current, and when the terminal voltage rises (when the charged amount is large), the storage battery is charged with a very small current.

The charging controller 3 in Fig. 1 converts an AC voltage (high voltage source) into a DC voltage (DC source) by an AC-DC converter 1 or an AC-DC converter 2, and performs switching control to charge either the storage battery group 6A or the storage battery group 6B included in a storage battery group 6.

The storage battery group 6A or the storage battery group 6B is configured by storage battery groups of the same type and capacity (KW). When one of the storage battery group 6A and the storage battery group 6B is in a charging state, the other is in a dischargeable state, that is, a power transmittable state.

To be more specific, the charging controller 3 switches and adjusts the DC voltages of the DC sources converted into the direct currents and input from a first charging circuit (using an AC-DC converter 1 side as the DC source) 3A and a second charging circuit (using an AC-DC converter 2 side as the DC source) 3B via a switching unit 3C, and charges either the storage battery group 6A or the storage battery group 6B of the storage battery group 6.

Depending on a type of the storage battery group 6, a constant voltage or a constant current is set for charging in accordance with a configuration of the storage battery group to be used. Incidentally, when the storage battery group 6A or the storage battery group 6B is configured by a lithium-ion battery group, a voltage value of a single unit is 4 to 5 (V) per one battery, although it differs depending on whether a plurality of batteries are connected in series or in parallel. The first charging circuit and the second charging circuit have the same capacity (KW) of power storage capacity.

Here, a life of each of the storage battery groups 6A and 6B included in the storage battery group can be expressed as a cycle life, but as a practical matter, the life of the battery is extremely affected by discharge depth. In this connection, a nickel-cadmium battery has 120,000 cycles if the discharge depth is 5%. Therefore, when deep charging and discharging are repeated in the storage battery groups 6A and 6B, the cycle life becomes extremely short. In addition, the storage battery groups 6A and 6B generally reduce the capacities at low temperatures and deteriorate at high temperatures. In addition, some batteries, such as NAS batteries, have an internal temperature of as high as 300°C, and charging and discharging are performed by setting a percentage of voltage from full charge as a reference while controlling the temperatures of the operating storage battery groups 6A and 6B.

On the other hand, in a case of a capacitor, for example, a terminal voltage V of the capacitor having capacitance C farad satisfies U = (CV2)/2 with respect to a remaining power amount U module due to discharging.

This satisfies a relationship of V = √(2U/C) with respect to the voltage V.

In the above equation, it is understood that the terminal voltage V decreases in proportion to a square root of a stored power amount U. Accordingly, the remaining amount monitor 21A (21B) in Fig. 5 accurately monitors the remaining amount and appropriately switches charging and discharging.

Simple calculation shows that the lives of the storage battery groups 6A and 6B are doubled when two storage battery groups are used by switching charging and discharging, compared with the life when one storage battery group is used for charging and discharging. However, in order to extend the life further, a monitoring configuration by the monitor is required.

Further, although operation differs depending on the type of the storage battery group, the storage battery group generally uses a chemical reaction, and thus the storage battery group should be used by setting an optimum charging and discharging region that meets a standard of the storage battery group while ensuring that the storage battery group is not discharged to a zero voltage or charged to full charge.

A power system interconnection unit 7 interconnects AC power discharged or generated due to discharging by first to third discharge resources using the storage battery group 6 to the predetermined power system. In the present embodiment, the power system interconnection unit 7 is configured to interconnect the power converted into AC power from the first to third discharge resources 7A to 7C that discharge or generate the power using the DC source supplied by the storage battery group 6 to the power system to supply auxiliary power as needed. As will be described later, the power system interconnection unit 7 is configured to discharge and generate power by selecting any one of the first to third discharge resources 7A to 7C or a combination thereof.

The first discharge resource 7A replaces a hydraulic part with the storage battery group 6, drives a motor with the storage battery group 6, generates the AC source by rotating a rotor of a power generator synchronized with the power system to be interconnected at arbitrary rotational speed, boosts the AC source to a transmittable voltage (1100 KV) by the transformers, and transmits the AC source (a battery type of the variable-speed pumped-storage power generation).

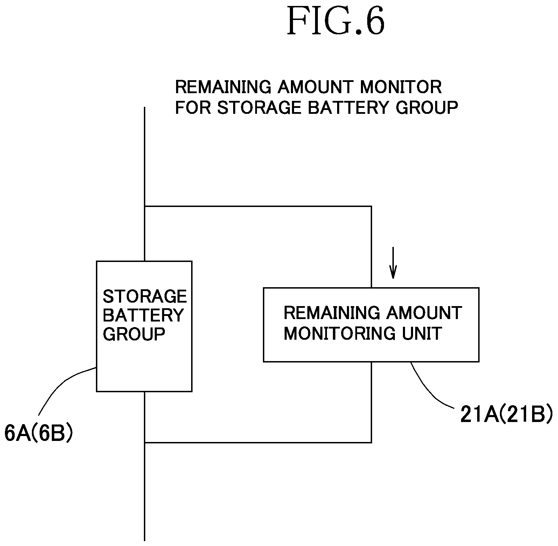

The second discharge resource 7B replaces the hydraulic part shown in Patent Literature 1 with the storage battery group 6, rotates a motor 108 with the storage battery group 6, generates the AC source by rotating a rotor of a power generator, boosts the AC source to a transmittable voltage (1100 KV) by the transformers, and transmits the AC source. The discharge resources 7A to 7C will be described in detail with reference to Fig. 6.

The third discharge resource 7C converts the DC source discharged from the storage battery groups 6A and 6B into the AC source by DC-AC conversion, and boosts the AC voltage (1100 KV) by the transformers to transform the AC source into the transmittable AC source (extra-high voltage). The third discharge resource 7C is a battery type (integrated with a power system interconnection circuit).

The power storage and discharge system according to the present embodiment is characterized by a configuration including the AC-DC converters 1 and 2 that convert the AC source supplied from the predetermined power receiving points 513A and 515C via the main transformers into the DC source; interconnecting the DC source charged in the plurality of storage battery groups 6A and 6B based on the DC source to the first to third discharge resources 7A to 7C that function as power system interconnection circuits; and boosting the AC source to the extra-high voltage to be transmitted to the power system interconnection point 514B between the predetermined power receiving point 513A and the predetermined power receiving point 514 C via the main transformers.

Fig. 2 is a block diagram illustrating a configuration of a power storage and discharge system of a compensation type which is disposed for each of a plurality of power receiving points with respect to a power system. The same components as those in Fig. 1 are denoted by the same reference signs, and the description thereof will be omitted. The power storage and discharge system of the compensation type may be referred to as a power storage and discharge system of a battery type of the pumped-storage power generation.

In Fig. 2, 500A to 500C indicate the power storage and discharge systems of the battery type of the pumped-storage power generation, and have approximately the same configuration and amount of power generation capacity as those of the storage and discharge system 500 shown in Fig. 1. A basic power plant 5001 is configured to transmit power generated by the plurality of power storage and discharge systems 500A to 500C interposed between the basic power plant and a lower power system. Therefore, even if power generation failure occurs in the power storage and discharge system 500B, the power storage and discharge systems 500A and 500C can transmit normally generated power. As a result, power generation efficiency can be remarkably improved as compared with the single power storage and discharge system shown in Patent Literature 3.

Specifically, at a point D, a power amount much larger than a power amount generated by the basic power plant 5001 can be transmitted to the lower power system. Here, power generation by the plurality of power storage and discharge systems 500A to 500C does not require fossil fuels, and when a power generation system that does not use nuclear power is adopted, treatment of radioactive waste is not required, either.

In addition, the power storage and discharge systems 500A to 500C themselves can adopt a configuration allowing the power storage and discharge system to be added to an existing power system afterward, and thus it is possible to flexibly add the system to the power systems including electric facilities operating in foreign countries without being affected by power circumstances and regional differences between urban areas, mountainous areas, and coastal areas.

Accordingly, effects described above can be obtained by adopting a configuration in which the power storage and discharge system shown in Fig. 2 includes one or more power receiving points of the AC source, disposed from an upper side toward a lower side with respect to the predetermined power system, other than a point where the power discharged or generated from the discharge resource is interconnected to the predetermined power system.

Further, the power storage and discharge systems shown in Fig. 2 adopt configurations to be separately allotted between the point A and the point C. Accordingly, for example, the point C or the point B can be separately stopped by remote control performed by operating a power generation control button disposed in a power generation amount monitoring control center (not shown).

That is, it is possible to adjust a power amount before the interconnection to the power system at the point D, and also transmit a power amount generated by the basic power plant 5001 as it is based on power consumption, of course.

As described above, by implementing the above-described power storage and discharge systems, a power amount generated from one basic power generation source can be easily increased and adjusted.

Even when power generation in the basic power plant 5001 cannot be performed due to some sort of accident, each of the power storage and discharge systems 500A to 500C includes one storage battery group being used for power generation and another storage battery group in a charged and standby state, and can generate power using these storage battery groups. That is, in this case, it is possible to cover a normal power transmission amount only by self-power generation without receiving power from others.

Note that, even if a power generation timing of each of the power storage and discharge systems 500A to 500C is controlled, the power storage and discharge systems 500A to 500C only function as temporary backup power generation of the basic power plant 5001, and thus the power storage and discharge systems 500A to 500C can function as sufficient backup power generation systems only until the power generation and power transmission of the basic power plant 5001 are restored.

As described above, the power generated by the power storage and discharge system can be used for an independent power generation system in which a plurality of storage battery groups are charged and discharged repeatedly to generate power, and can also be used as an power source for driving a motor when the basic power plant 5001 uses the system as the motor included in a pumped-storage power generator. That is, the power storage and discharge system and the power generation system using the pumped-storage power generator form a technical relationship related to the power generation system either directly or indirectly as the power generation system.

Therefore, with regard to the power storage and discharge system, the applicant of the present application considers that a configuration of generating power using a plurality of storage battery groups and a configuration of driving an existing power generator by receiving power generated using a plurality of storage battery groups satisfy a technical relationship related to form a general inventive concept.

In the present embodiment, as shown in Fig. 1, two or more equally dividable storage battery groups 6A and 6B are equally divided into a group dedicated to charging and a group dedicated to discharging, and the charging controller 3 switches the groups such that all the storage battery groups on a charging side are replaced with all the storage battery groups on a discharging side when the remaining amount of any of the storage battery groups on the discharging side reaches a predetermined remaining amount value.

Hereinafter, configurations of the first to third discharge resources 7A to 7C included in the power system interconnection unit 7 will be described in detail.

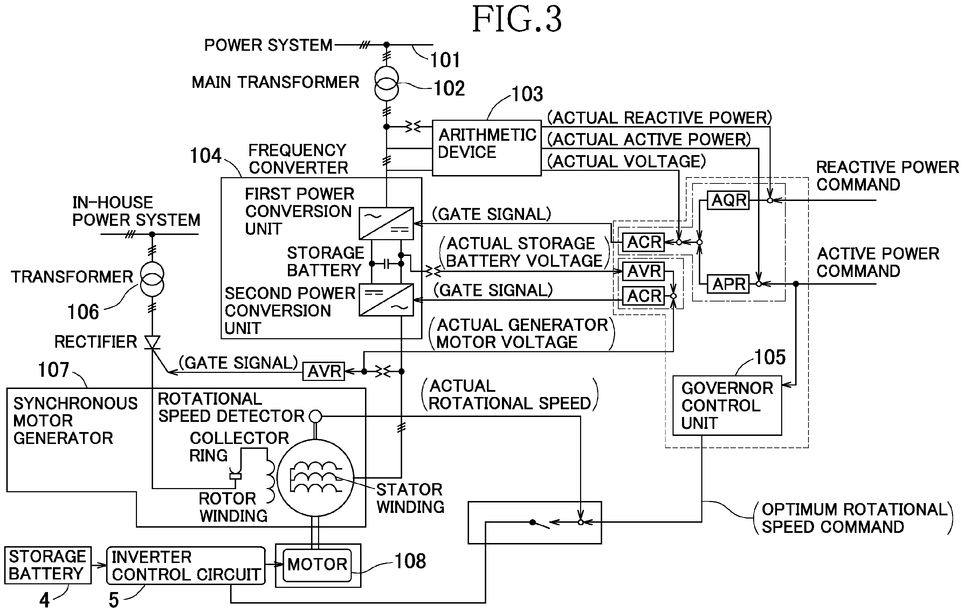

Fig. 3 is a block diagram illustrating an example of a circuit configuration of the power storage and discharge system according to the present embodiment. Basically, an example in which the present invention is applied to the pumped-storage power generation system shown in Fig. 10 as one example will be described. Specifically, the hydraulic part of the pumped-storage power generation is replaced with the storage battery group 6, a motor included in the first discharge resource 7A is driven by the DC source of the storage battery group 6, and power is generated by a motor generator 107 directly connected to a rotary shaft of the motor.

The power storage and discharge system shown in Fig. 3 is characterized in that the motor generator 107 and the motor 108 driven by the DC source of the storage battery group 6 are synchronized, and after the synchronization, rotation is changed from a motor 108 side to control a power generation amount and a power generation state.

Here, the motor generator 107 has a configuration in which a part using hydraulic power for the storage battery group 6 in a water conduit system of the pumped-storage power generation system shown in Patent Literature 1 is replaced with only the storage battery group 6.

Thus, the motor 108 directly connected to the rotor of the motor generator (generator) 107 can be operated at arbitrary rotational speed, and a frequency or the like can also be controlled.

A rotational speed command for the synchronized motor 108 is transmitted from a control device 61 to a conversion device 62 shown in Fig. 3 to control the rotational speed of a rotor 107A of the motor 108. Accordingly, power generation of the motor generator 107 after the synchronization is performed based on the command transmitted from the control device 61, and stability can be expected even against AFG adjustment and system disturbance. The conversion device 62 is configured as a VVVF inverter that changes frequency and voltage at the same time.

<First Power System Interconnection>

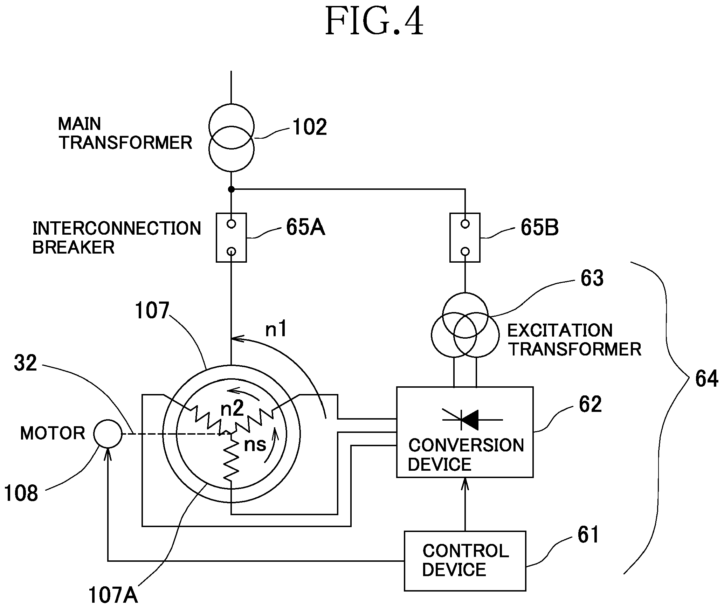

Fig. 4 is a circuit block diagram illustrating a configuration of a major part of the power storage and discharge system shown in Fig. 3. Hereinafter, the configuration of the major part of first power system interconnection will be described with reference to Fig. 4.

In Fig. 4, the rotary shaft of the motor 108 included in the first discharge resource 7A is directly connected to a rotary shaft of the synchronous motor generator 107. The rotor of the synchronous motor generator 107 is in a three-phase winding form and connected to a secondary excitation device. The secondary excitation device 64 includes the conversion device 62 that outputs a lowered frequency (Hz), an excitation transformer 63, and the control device 61. One of the main transformers 102 is connected to an interconnection breaker 65A, and another one of the main transformers 102 is connected to an interconnection breaker 65B.

The present embodiment is characterized by a configuration in which a pump turbine unit of a variable speed generator is replaced with the motor 108.

Here, when the rotational speed of a stator of the synchronous motor generator 107 shown in Fig. 4 is n1, and rotor windings L1 to L3 are AC-excited at a low frequency (slip frequency) corresponding to a difference n2 between the rotational speed n1 of a stator magnetic field and the rotational speed n2 of the rotor, the rotor can be controlled to the arbitrary rotational speed while the synchronous motor generator 107 is kept synchronized with the power system.

This allows operation of the motor 108 directly connected to the rotor at the arbitrary rotational speed, and also control of the frequency or the like.

The rotational speed command for the synchronous motor generator 107 is transmitted from the control device 61 to the conversion device 62 shown in Fig. 4, and controls the rotational speed of the rotor of the motor 108. Accordingly, power generation of the synchronous motor generator 107 after the synchronization is performed based on the command transmitted from the control device 61, and stability can be expected even against AFG adjustment and system disturbance. The conversion device 62 is configured as a VVVF inverter that changes frequency and voltage at the same time.

According to the first power system interconnection, a simple configuration is adopted in which the synchronous power generator is rotationally driven by the motor using the DC source from the storage battery groups 6A and 6B included in the storage battery group that has been charged, without significantly changing the configuration of the variable-speed pumped-storage power generation system, and thus a water turbine unit for the pumped-storage power generation can be easily replaced with the motor 108.

As a result, the power equivalent to the power from the variable-speed pumped-storage power generation can be transmitted at low cost with a small-scale system configuration. This is called as a variable speed type of the motor generator.

<Second Power System Interconnection>

Fig. 5 is a block diagram illustrating another configuration of the power system interconnection unit 7 shown in Fig. 1. The same components as those in Fig. 1 are denoted by the same reference signs, and the description thereof will be omitted. Hereinafter, the configuration of a major part of second power system interconnection will be described with reference to Fig. 3.

In Fig. 5, the charging controller 3 is connected to a charging circuit system A and a charging circuit system B shown in Fig. 1 in a confluent manner, and comprehensively controls a charging process by controlling devices such as a constant voltage circuit or a constant current circuit depending on the type of the storage battery groups 6A and 6B included in the storage battery group. Since the remaining amounts of the storage battery groups 6A and 6B included in the storage battery group need to be constantly monitored, the remaining amounts of the storage battery groups 6A or 6B connected in parallel are monitored using the remaining amount monitors 21A or 21B shown in Fig. 6.

Fig. 6 is a block diagram illustrating an example of a monitor circuit for detecting the remaining amounts of the storage battery groups 6A and 6B.

The monitor circuit shown in Fig. 6 detects the remaining amount of each of the storage battery groups 6A and 6B by a predetermined detection method, and outputs detection data to the charging controller 3.

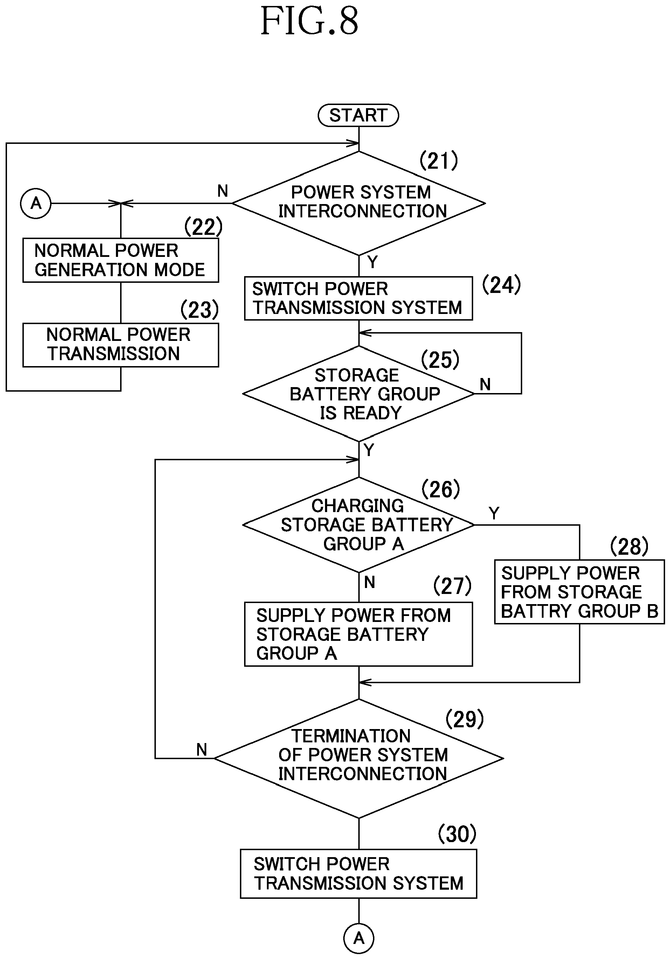

When the voltages of the storage battery groups 6A and 6B are monitored, the charging controller 3 shown in Fig. 3 controls switching of switches SW1 to SW4. Operation requirements of the switches SW1 to SW4 are based on Fig. 8.

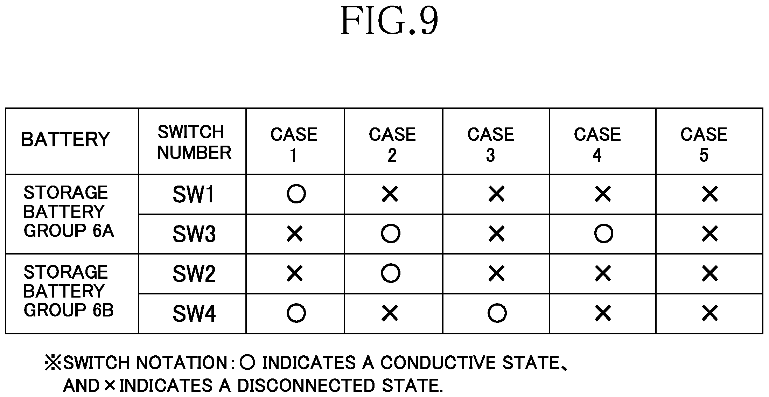

As shown in Fig. 9, in a case 1 and a case 2, one of the storage battery groups is being charged while the other is being discharged.

In a case 3 and a case 4, charging is completed and the charging switch is in a disconnected state, while only discharging is being continued. Note that the charging switch may be turned off before charging is completed. It happens when the remaining amount monitor monitors individual storage battery groups and detects a storage battery group whose remaining amount is reduced earliest in the storage battery groups for discharging. The remaining amount monitor notifies this, and charging and discharging are inevitably replaced. In a case of the pumped-storage power generation, this is when a water level of the upper reservoir is low and the system is approaching a point where it must be shut down. In a case 5, all the switches are in the disconnected state. This is a state of "standby for power generation and transmission" with the storage battery groups charged, when the power storage and discharge system is disconnected from the power system due to disconnection or some sort of accident in the power system to be interconnected.

When the power storage and discharge system is disconnected from the power system and only charging is desired to be performed, or when the storage battery group 6A or the storage battery group 6B is directly charged from a power generation side although a circuit is different, the switch SW1 and the switch SW2 are set to a conductive state.

Then, the storage battery group 6A or 6B drives the motor generator 110 via an inverter circuit 11. The AC source generated by the motor generator 110 included in the second discharge resource 7B is transmitted to a power system interconnection 514B to be interconnected via a power system interconnection circuit 12. Therefore, the power system interconnection circuit 12 adopts a configuration in which part of the power is transmitted to be fed back to the charging circuit system B via the power system interconnection 514B as shown in Fig. 5.

According to the second power system interconnection, a simple configuration is adopted in which variable-voltage variable-frequency conversion is performed using the inverter circuit 11 from the storage battery group 6A or the storage battery group 6B, and the motor generator 110 is driven by the inverter circuit 11. Accordingly, the power equivalent to the power from the pumped-storage power generation can be transmitted with a configuration simpler than the configuration of the first discharge resource. If a discharging amount of power from the storage battery used for driving power is small or the capacity is small, the solution is that a number of storage batteries in each of the storage battery groups for charging and discharging is increased or the capacity of each of the storage batteries is increased.

As described above with reference to Fig. 5, actual reactive power, actual active power, actual voltage, or the like is measured by an arithmetic device 103, and the optimum speed command is issued before the power system interconnection after the power generation, which is a part not involved in the power generation in the pumped-storage power generation using hydraulic power in Fig. 3.

As described above, existing technology as shown in Fig. 3 is used for various technology or the like used for the part not involved in the power generation.

That is, this is the battery type of the pumped-storage power generation, and the motor generator using the storage battery.

<Third Power System Interconnection>

Third power system interconnection has a configuration in which the AC source converted by the inverter circuit 11 shown in Fig. 4 included in the third discharge resource 7C is boosted by the transformers (not shown) to 6600 V to be transmitted to an in-house power system. This system is an optimum system when the storage battery group 6A or the storage battery group 6B is configured using a NAS system.

The third discharge resource is different in configuration from the first and second discharge resources in that power supplied from the power system is converted into the DC source to be charged in the storage battery group 6A or the storage battery group 6B, and the discharged power from the storage batteries is interconnected to the power system via a so-called static conversion device such as an inverter, thereby eliminating use of a rotor such as a generator.

Therefore, when the power supplied from the power system or the like is a main source, the power generated by solar power generation or wind power generation can be combined with the power storage and discharge system as a secondary source, so that the power can be transmitted using the third discharge resource even when the weather condition changes and the generation amount of the solar power generation or the wind power generation cannot be expected. As a result, changes in the generation amount of the solar power generation or the wind power generation can be reliably suppressed, and more stable transmission can be performed.

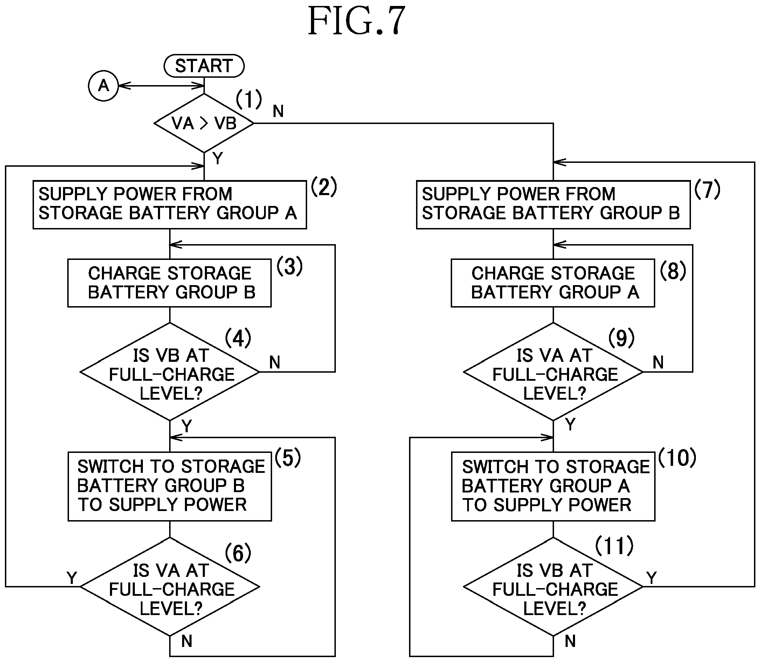

Fig. 7 is a flowchart showing an example of a power generation control method of the power storage and discharge system according to the present embodiment. Note that (1) to (10) indicate steps. Each step is implemented by the charging controller 3 that executes a control program stored in a memory unit (not shown).

First, the charging controller 3 acquires potentials of the storage battery group 6A and the storage battery group 6B from remaining amount monitoring units 21A and 21B, compares the potential VA of the storage battery group 6A and the potential VB of the storage battery group 6B, and determines whether the potential VA > the potential VB is satisfied (1).

When the charging controller 3 determines that the potential VA > the potential VB is satisfied, the charging controller 3 performs control such that power is supplied from the storage battery group 6A (2), and the storage battery group 6B is charged (3).

Next, the charging controller 3 determines whether the potential VB of the storage battery group 6B is at a full-charge level (4). When the charging controller 3 determines that the potential VB of the storage battery group 6B is at the full-charge level, the charging controller 3 switches the storage battery group for discharging from the storage battery group 6A to the storage battery group 6B (5).

Next, the charging controller 3 determines whether the potential VA of the storage battery group 6A is at the full-charge level (6). When the charging controller 3 determines that the potential VA of the storage battery group 6A is at the full-charge level, the process returns to the step (2), and the charging controller 3 performs control such that the power is supplied from the storage battery group 6A.

On the other hand, when the charging controller 3 determines in the step (6) that the potential VA of the storage battery group 6A is not at the full-charge level, the process returns to the step (5), and the charging controller 3 switches the storage battery group to the storage battery group 6B.

On the other hand, when the charging controller 3 determines in the step (1) that the potential VA > the potential VB is not satisfied, the charging controller 3 performs control such that the power is supplied from the storage battery group 6B (7) and the storage battery group 6A is charged (8).

Next, the charging controller 3 determines whether the potential VA of the storage battery group 6A is at the full-charge level (9). When the charging controller 3 determines that the potential VA of the storage battery group 6A is at the full-charge level, the charging controller 3 switches the storage battery group for discharging from the storage battery group 6B to the storage battery group 6A (10).

Next, the charging controller 3 determines whether the potential VB of the storage battery group 6B is at the full-charge level (11). When the charging controller 3 determines that the potential VB of the storage battery group 6B is at the full-charge level, the process returns to the step (7), and the charging controller 3 performs control such that the power is supplied from the storage battery group 6B.

On the other hand, when the charging controller 3 determines in the step (11) that the potential VB of the storage battery group 6B is not at the full-charge level, the process returns to the step (10), and the charging controller 3 switches the storage battery group to the storage battery group 6A.

As a result, the storage battery groups 6A and 6B that repeat charging and discharging can be switched at an appropriate timing, and the lives of the storage battery groups 6A and 6B can be extended.

Fig. 8 is a flowchart showing an example of a discharge control method of the power storage and discharge system according to the present embodiment. This is an example in which a control unit (not shown) controls the charging controller 3 to determine whether the power system interconnection is possible, and controls switching of the DC source. Note that (21) to (30) indicate steps. Each step is implemented by executing a control program stored in a memory unit of the control unit (not shown).

The control unit determines whether a power supply shortage may occur between power systems based on a power demand index varying in real time and determines whether to execute the power system interconnection (21). The power demand index is a percentage value of the day which is calculated by a power company from power demand trends in summer.

When the control unit determines that the power system interconnection is not to be executed, the control unit sets a normal power generation mode (22) and starts normal power transmission (23), and the process returns to the step (21). On the other hand, when the control unit determines in the step (21) that the power system interconnection is to be executed, the control unit sets a power transmission system to a power system interconnection mode (24).

Next, the control unit determines whether the charging controller 3 can supply power from the storage battery group 6, that is, whether the DC source is ready (25).

Next, the control unit queries the charging controller 3 to determine whether the storage battery group 6A is being charged (26). When the control unit determines that the storage battery group 6A is being charged, the control unit supplies the DC power from the storage battery group 6B to the power system interconnection unit 7 included in the power system interconnection unit (28). Next, the control unit determines whether the power system interconnection is to be terminated based on the power demand index described above(29). When the control unit determines that the power system interconnection is not to be terminated, the process returns to the step (26).

On the other hand, when the control unit determines in the step (29) that the power system interconnection is to be terminated, the control unit instructs switching of the power transmission system (30), and the process returns to the step (22) to resume the normal power transmission.

On the other hand, when the control unit determines in the step (26) that the storage battery group 6A is not being charged, the control unit supplies the DC power from the storage battery group 6A to the power system interconnection unit 7 included in the power system interconnection unit (27). Thereafter, the process proceeds to the step (29), and the same process is repeated.

In this way, the power is interconnected to the power system from the storage battery group for discharging via the inverter or the like without using a dynamic machine such as a generator.

As a result, discharging based on the power system interconnection can be performed at an appropriate timing, and the power transmission can be performed to satisfy the power demand. The power is interconnected to the power system from a static conversion device such as the inverter without using the dynamic generator, and this is a so-called battery type.

<Advantageous Effects of Present Embodiment>

According to the present embodiment, two or more storage battery groups are prepared and divided into two, one battery module group is dedicated to charging and the other battery module group is dedicated to discharging, and voltage or the like of a discharging part is constantly monitored. When a remaining amount of the storage battery group for discharging is low, the battery module groups for charging and discharging can be switched and used. As a result, a number of times of charging and discharging can be greatly reduced in a certain period and lives of the storage battery groups can be extended.

Further, according to the present embodiment, when a storage battery group 6A on a charging side is nearly fully charged, and a storage battery group 6B is still discharging, charging to the storage battery group 6A on the charging side is stopped and only discharging from the storage battery group 6B is performed. Further, when a remaining amount of the storage battery group during discharging becomes low, the storage battery groups on the charging side and a discharging side are switched even if the storage battery group on the charging side is not in a full-charge state. As a result, power transmission suitable for charging and discharging states of both the storage battery groups can be performed.

Further, according to the present embodiment, the power storage and discharge system adopts a configuration in which power generated by a motor generator is interconnected to a power system, and part of the generated power is fed back to the storage battery groups used for driving power and charged in a storage battery group part together with power supplied from the power system before the power system interconnection. The charged power is used by switching the charging side and the discharging side, and thus can be used for the driving power for a long time.

As described above, according to each embodiment, as compared with an existing pumped-storage power generation system, the configuration is simple in that a battery group including a plurality of storage battery groups is repeatedly and alternately charged and discharged, and thus stable power transmission can be performed while maintaining a power generation amount equal to or higher than that of the pumped-storage power generation system.

Further, if the power is stable, a load applied to the storage battery group is reduced, and thus it is possible to flexibly cope with a case where power supply with a large amount of power is not necessarily preferable.

This is because, for example, when a lithium ion battery is charged with the large amount of power (a large current), a fire occurs.

Further, according to the present embodiment, charging power is obtained by adding the power supplied from the power system before the power system interconnection and the power supplied from the power system after the power system interconnection. As a result, a load on the power system can be reduced as compared with a case where only one of the powers is used. In addition, the load can be similarly reduced by setting both the charging powers to be the same.

Although there is a slight difference in frequency or the like before and after the power system interconnection, both the supplied powers can be made approximately the same by equalizing turn ratios of two transformers before and after the interconnection.

Further, according to the present embodiment above, a power generation part of the pumped-storage power generation is replaced with motor power generation. As a result, a large-scale facility for generating power by discharging an amount of water from a high position to rotate a generator is not required, and power generation cost can be significantly reduced. In particular, the present embodiment can reduce the cost and remarkably reduce an occupied area, while the conventional pumped-storage power generation system requires high cost and a large occupied area, which has been problems.

The present embodiment above has been described based on a case where a DC source is configured by one set of the storage battery groups 6A and 6B, but the DC source may be configured by connecting a plurality of sets of the storage battery groups 6A and 6B in parallel.

The present embodiment above has been described in detail based on the power storage and discharge system that includes one or more power receiving points of an AC source supplied from a predetermined power system. However, a power generation system may have a different configuration for receiving power supply from the predetermined power system. As shown in Fig. 1, the power generation system is connected via transmission lines with an upper power system and a lower power system and generates power using power from both the upper power system and the lower power system. The power generation system includes a plurality of storage battery groups charged with DC sources converted from AC sources of upper power from the upper power system and lower power from the lower power system, a discharge resource that discharges or generates power using the DC source charged to any of the plurality of storage battery groups, and an interconnection means that interconnects the AC power discharged or generated due to discharging by the discharge resource to the predetermined power systems. The power generation system includes one or more power receiving points of the AC sources, disposed from an upper side toward a lower side with respect to the predetermined power systems, other than a point where the power discharged or generated by the discharge resource is interconnected to the power systems.

Further, a plurality of power storage and discharge systems 500A to 500C shown in Fig. 2 do not have to independently store or discharge power. The power storage and discharge system may be configured as a combination of any one of the power storage and discharge systems that independently stores and discharges power and a system in which a hydraulic part of variable-speed pumped-storage power generation is replaced with the storage battery group 6, a motor included in a first discharge resource 7A is driven by a DC source of the storage battery group 6, and power is generated by a synchronous motor generator 107 directly connected to a rotary shaft of the motor.

In this way, since power can also be generated and transmitted using power generated using the plurality of storage battery groups without significantly changing a configuration of an existing power generation facility, it is possible to construct a system that efficiently repeats power generation and discharge while suppressing an increase in power generation cost.

The above-described invention can include at least the following embodiments.

(1) A power storage and discharge system includes one or more power receiving points of an AC source supplied from a predetermined power system, a plurality of storage battery groups that are charged with a DC source converted from the AC source, a discharge resource that discharges or generates power by using the DC source charged in any of the plurality of storage battery groups, and an interconnection means that interconnects AC power discharged or generated due to discharging by the discharge resource to the predetermined power system. The one or more power receiving points of the AC source include one or more power receiving points, disposed from an upper side toward a lower side with respect to the predetermined power system, other than a point where the AC power discharged or generated by the discharge resource is interconnected to the power system.

(2) The plurality of storage battery groups include two or more equally dividable storage battery groups and are equally divided into a group dedicated to charging and a group dedicated to discharging. The power storage and discharge system further includes a control means that controls switching between all of the storage battery groups on a charging side and all of the storage battery groups on a discharging side when a remaining amount of any of the storage battery groups dedicated to discharging reaches a predetermined remaining amount value.

(3) The discharge resource includes first to third discharge resources that discharge or generate the power using the DC source charged in the plurality of storage battery groups.

(4) The first discharge resource generates the power by rotationally driving a rotor of a motor generator by a motor driven by the DC source.

(5) The second discharge resource converts the DC source into the AC source by an inverter, and then drives the motor generator to generate the power.

(6) The third discharge resource generates the power by converting the DC source into the AC source by the inverter.

[Industrial Applicability]

If this system can be spread in accordance with power situations in Japan and the world, remarkably higher economic activities than those at the present time become possible by using abundant power.

That is, if a large number of these systems are disposed to generate power at a point corresponding to a downstream area of a basic power generation system such as nuclear power generation, thermal power generation, or hydraulic power generation, remarkably higher power consumption can be achieved. In addition, when only this system is described, there is no need of nuclear power, thermal power, or hydraulic power, and it does not use any fuel.

That is, by spreading the power storage and discharge system according to the present embodiment, the system can be expected to play a central role in a power network (system) beyond an area of an alternative power generation system.

Further, the power storage and discharge system according to the present embodiment can be applied between any power systems, and therefore, can be applied not only as a power generation system in a mountainous area but also as a power generation system of a city type, and it is desired that the power storage and discharge system is implemented in countries in the world where electric power circumstances are unstable.

In addition, as described earlier, this system alone emits no $CO_2$ or radiation and requires no huge power generation facility construction.

[Reference Signs List]

6A    storage battery group
6B    storage battery group
3      charging controller
11    inverter circuit
107   motor generator

**Claims**

1. A power storage and discharge system comprising:

one or more power receiving points of an AC source supplied from a predetermined power system;
a plurality of storage battery groups that are charged with a DC source converted from the AC source;

a discharge resource that discharges or generates power by using the DC source charged in any of the plurality of storage battery groups; and an interconnection means that interconnects AC power discharged or generated due to discharging by the discharge resource to the predetermined power system,
wherein the one or more power receiving points of the AC source include one or more power receiving points, disposed from an upper side toward a lower side with respect to the predetermined power system, other than a point where the AC power discharged or generated by the discharge resource is interconnected to the power system.

2. The power storage and discharge system according to claim 1,

wherein the plurality of storage battery groups include two or more equally dividable storage battery groups and are equally divided into a group dedicated to charging and a group dedicated to discharging, and
wherein the system further comprises a control means that controls switching between all of the storage battery groups on a charging side and all of the storage battery groups on a discharging side when a remaining amount of any of the storage battery groups dedicated to discharging reaches a predetermined remaining amount value.

3. The power storage and discharge system according to claim 1, wherein the discharge resource includes first to third discharge resources that discharge or generate the power using the DC source charged in the plurality of storage battery groups.

4. The power storage and discharge system according to claim 1, wherein a first discharge resource generates the power by rotationally driving a rotor of an electrically-driven part of a motor generator synchronized with the power system to be interconnected by the DC source.

5. The power storage and discharge system according to claim 1, wherein a second discharge resource converts the DC source into the AC source by an inverter, and then drives a motor generator to generate the power.

6. The power storage and discharge system according to claim 1, wherein a third discharge resource converts the DC source into the AC source by an inverter to interconnect the AC source to the power system.

# FIG.1

POWER SYSTEM →

513A　514B　POWER SYSTEM INTERCONNECTION　515C

7A～7C

500

DISCHARGE RESOURCE　7

6　6A　6B

1　STORAGE BATTERY GROUP　STORAGE BATTERY GROUP　2

AC–DC CONVERTER　AC–DC CONVERTER

3

CHARGING CONTROLLER

4　5

3A　3C　3B

EP 4 391 353 A1

# FIG.2

POINT B

POWER STORAGE AND DISCHARGE SYSTEM — 500B

5001

EXISTING POWER PLANT

THERMAL POWER, HYDRAULIC POWER, ETC.

POWER GENERATION TO INTERCONNECTION →

← TO CHARGING AND POWER GENERATION

POINT A

POWER STORAGE AND DISCHARGE SYSTEM — 500A

5000

POINT D

POINT C

POWER STORAGE AND DISCHARGE SYSTEM — 500C

EP 4 391 353 A1

# FIG.3

EP 4 391 353 A1

# FIG.4

MAIN
TRANSFORMER — 102

INTERCONNECTION
BREAKER — 65A

— 65B

107

n1

63

EXCITATION
TRANSFORMER

64

32

MOTOR

108

n2

ns

CONVERSION
DEVICE — 62

107A

CONTROL
DEVICE — 61

EP 4 391 353 A1

# FIG.5

CHARGING CIRCUIT A

CHARGING CIRCUIT B

CHARGING CONTROLLER — 3

MOTOR GENERATOR — 110

POWER SYSTEM INTERCONNECTION CIRCUIT — 12

TO CHARGING CIRCUIT B

6A

STORAGE BATTERY GROUP A

SW1

SW3

INVERTER CIRCUIT

11

SW2

STORAGE BATTERY GROUP B

SW4

514B

POWER SYSTEM INTERCONNECTION

6B

EP 4 391 353 A1

# FIG.6

REMAINING AMOUNT MONITOR
FOR STORAGE BATTERY GROUP

STORAGE
BATTERY
GROUP

6A(6B)

REMAINING AMOUNT
MONITORING UNIT

21A(21B)

EP 4 391 353 A1

# FIG.7

START

A

(1) VA > VB — N

Y

(2) SUPPLY POWER FROM STORAGE BATTERY GROUP A

(3) CHARGE STORAGE BATTERY GROUP B

(4) IS VB AT FULL-CHARGE LEVEL? — N

Y

(5) SWITCH TO STORAGE BATTERY GROUP B TO SUPPLY POWER

(6) IS VA AT FULL-CHARGE LEVEL? — Y / N

(7) SUPPLY POWER FROM STORAGE BATTERY GROUP B

(8) CHARGE STORAGE BATTERY GROUP A

(9) IS VA AT FULL-CHARGE LEVEL? — N

Y

(10) SWITCH TO STORAGE BATTERY GROUP A TO SUPPLY POWER

(11) IS VB AT FULL-CHARGE LEVEL? — Y / N

EP 4 391 353 A1

# FIG.8

A flowchart:

START

(21) POWER SYSTEM INTERCONNECTION
- N → A
  - (22) NORMAL POWER GENERATION MODE
  - (23) NORMAL POWER TRANSMISSION
- Y → (24) SWITCH POWER TRANSMISSION SYSTEM

(25) STORAGE BATTERY GROUP IS READY
- N → (back to 24)
- Y →

(26) CHARGING STORAGE BATTERY GROUP A
- Y → (28) SUPPLY POWER FROM STORAGE BATTRY GROUP B
- N → (27) SUPPLY POWER FROM STORAGE BATTERY GROUP A

(29) TERMINATION OF POWER SYSTEM INTERCONNECTION
- N → (back to Y of 25)
- (30) SWITCH POWER TRANSMISSION SYSTEM

A

# FIG.9

| BATTERY | SWITCH NUMBER | CASE 1 | CASE 2 | CASE 3 | CASE 4 | CASE 5 |
|---|---|---|---|---|---|---|
| STORAGE BATTERY GROUP 6A | SW1 | ○ | × | × | × | × |
| | SW3 | × | ○ | × | ○ | × |
| STORAGE BATTERY GROUP 6B | SW2 | × | ○ | × | × | × |
| | SW4 | ○ | × | ○ | × | × |

※SWITCH NOTATION: ○ INDICATES A CONDUCTIVE STATE、
AND × INDICATES A DISCONNECTED STATE.

EP 4 391 353 A1

# FIG.10

POWER SYSTEM

MAIN TRANSFORMER

214 FREQUENCY CONVERTER

FIRST POWER CONVERSION UNIT — 211 (GATE SIGNAL)

ARITHMETIC DEVICE

(ACTUAL REACTIVE POWER)
(ACTUAL ACTIVE POWER)
(ACTUAL VOLTAGE)

REACTIVE POWER COMMAND

217 — AQR

IN-HOUSE POWER SYSTEM

213 STORAGE BATTERY

(ACTUAL STORAGE BATTERY VOLTAGE)

ACR

TRANSFORMER

SECOND POWER CONVERSION UNIT

(GATE SIGNAL)

AVR

ACTIVE POWER COMMAND

218

ACR

APR

(ACTUAL GENERATOR MOTOR VOLTAGE)

219

212

RECTIFIER

(GATE SIGNAL) AVR

202 SYNCHRONOUS MOTOR GENERATOR

ROTATIONAL SPEED DETECTOR

COLLECTOR RING

(ACTUAL ROTATIONAL SPEED)

GOVERNOR CONTROL UNIT

UPPER RESERVOIR WATER LEVEL

LOWER RESERVOIR WATER LEVEL

216

202A

STATOR WINDING

ROTOR WINDING

215

201 REVERSIBLE PUMP TURBINE

201A CASING

RUNNER

201B

(OPTIMUM GUIDE VANE)

GOVERNOR ASR

OPTIMUM ROTATIONAL SPEED COMMAND

OPTIMUM GUIDE VANE OPENING DEGREE COMMAND

EP 4 391 353 A1

## INTERNATIONAL SEARCH REPORT

International application No.

**PCT/JP2022/033083**

### A. CLASSIFICATION OF SUBJECT MATTER

*H02P 9/04*(2006.01)i; *H02J 3/32*(2006.01)i; *H02J 3/38*(2006.01)i; *H02J 7/00*(2006.01)i; *H02J 7/02*(2016.01)i;
*H02J 7/34*(2006.01)i; *H02J 15/00*(2006.01)i; *H02P 103/20*(2015.01)n
FI:    H02P9/04 Z; H02J7/34 B; H02J3/38 110; H02J15/00 D; H02J7/00 L; H02J7/02 F; H02J3/32; H02P103:20

According to International Patent Classification (IPC) or to both national classification and IPC

### B. FIELDS SEARCHED

Minimum documentation searched (classification system followed by classification symbols)

H02P9/04; H02J3/32; H02J3/38; H02J7/00; H02J7/02; H02J7/34; H02J15/00; H02P103/20

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2012-044819 A (ROHM CO., LTD.) 01 March 2012 (2012-03-01)<br>    paragraph [0262], fig. 25 | 1-6 |
| Y | JP 2020-089248 A (SHIRAKAWA, Toshihisa) 04 June 2020 (2020-06-04)<br>    paragraphs [0009], [0015], [0016] | 1-6 |
| Y | JP 5-199661 A (HITACHI, LTD.) 06 August 1993 (1993-08-06)<br>    fig. 1, 2 | 4-5 |

☐ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **09 November 2022** | **22 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/033083**

| Patent document cited in search report | | | Publication date (day/month/year) | Patent family member(s) | Publication date (day/month/year) |
|---|---|---|---|---|---|
| JP | 2012-044819 | A | 01 March 2012 | (Family: none) | |
| JP | 2020-089248 | A | 04 June 2020 | (Family: none) | |
| JP | 5-199661 | A | 06 August 1993 | (Family: none) | |

Form PCT/ISA/210 (patent family annex) (January 2015)

## REFERENCES CITED IN THE DESCRIPTION

**Patent documents cited in the description**

- JP 2015012636 A
- JP 2017163745 A
- JP 2015019538 A

**Non-patent literature cited in the description**

- Proposal Papers for Innovation Policy Making Based on Technology and Economic/Social Quantitative Scenarios for Realizing Law Carbon Society, Potential and Cost of Pumped-storage Power Generation as Storage Battery System in Japan, published by Japan Science and Technology Agency. *Strategy Center for Low Carbon Society,* January 2019
- **MICHIO OKAMURA.** Electric Double-layer Capacitor and Storage System. The Nikkan Kogyo Shimbun, Ltd, 30 September 2005
- Large Scale Power Storage Battery. The Nikkan Kogyo Shimbun, Ltd, 28 March 2011
- **MIYUKI CHIBA.** d-book Pumped-Storage Power Plant. Denkishoin, Ltd, 20 December 2000
- **SHOUZOU HAGINO.** d-book Operation and Test of Transformer. Denkishoin, Ltd, 12 December 2000